# EUROPEAN PATENT SPECIFICATION

(11) **EP 2 265 128 B1**
(45) Date of publication and mention of the grant of the patent: **08.11.2017**
(21) Application number: 09700068.1
(22) Date of filing: 31.03.2009
(51) Int. Cl.: A23G 3/42

(54) **GUM CONFECTIONS**
GUMMISÜSSWAREN
CONFECTIONS DE GOMME À MÂCHER

(30) Priority: 02.04.2008 EP 08103314
(43) Date of publication of application: 29.12.2010
(73) Proprietor: Coöperatie AVEBE U.A., 9641 GK Veendam (NL)
(72) Inventor: BUWALDA, Pieter Lykle, NL-9718 MJ Groningen (NL); TOMASOA, David Thomas Benjamin, NL-9363 HB Marum (NL)
(74) Representative: V.O.
(86) International application number: PCT/EP2009/053774
(87) International publication number: WO 2009/080838

(56) References cited:
- EP-A- 0 884 384
- EP-B- 0 932 444
- WO-A-00/44241
- WO-A-01/91721
- WO-A-2004/056192
- WO-A-2008/071744
- MAAREL M J E C VAN DER ET AL: "A novel thermoreversible gelling product made by enzymatic modification of starch." STARCH/STAERKE, vol. 57, no. 10, 2005, pages 465-472, XP002496170

## Description

This invention relates to compositions for making elastic jelly confections and the production thereof.

In today's sugar confectionery industry many solutions exist for the producer to manufacture his jelly confections. For instance in the so-called wine gums he can pick between on solutions based on gelatine, pectin, and/or starches.

In general gelatine is for production and functionality the preferred solution. Wine gums based on gelatine are highly elastic as opposed to similar products based on the so-called fluidity starches. Furthermore gelatine offers the producer a high flexibility in the process in particular tolerance in the cooking temperature and shear tolerance.

The use of gelatine (or hydrolysed collagen) in the food industry, however, has been criticised because of its animal origin. Traditionally, gelatine containing foodstuff has been avoided by vegetarian consumers and by consumers whose religion teaches to avoid animal derived products like gelatine. These traditional gelatine avoiding consumers were in general satisfied with buying products that contained less superior binding agents to accommodate their vegetarian and/or religious preferences. More recently, however, the general consumer, albeit not bound by vegetarian or religious preferences, is also shifting to a preference for foodstuff wherein gelatine is replaced by another agent. Many reasons exist for this shift among them are scare of food scandals (including "mad cow disease") and general concerns about animal derived products.

A major improvement of the functionality of starches could be achieved by blends of crosslinked stabilized starches and fluidity starches (Patent EP 1146795). In this patent the fluidity starch is used to maintain the shape of the wine gum, the crosslinked stabilised starch is used to impart elasticity. A draw back of this method is narrow window of cooking temperature and shear during cooking. Too high temperatures and too much shear will result in a slimy sticky product. To the artisan this is known as 'overcooked'. Too low temperatures and not enough shear will result in a short texture with a starch off taste. This is known as 'undercooked'.

WO2008/071744 discloses that by employing amylomaltase treated starches well below the concentration where they form a continuous gel, such as at a concentration of 0.1 to 2.5 wt% of amylomaltase treated starch, a good replacer for fat and/or cream can be obtained in food products such as dairy products.

EP0884384 discloses a method for producing a food, wherein a heat resistant amylomaltase is added to a food material comprising starch.

In patent EP 0932444 the use of amylomaltase treated starch for the preparation of gels is described. When these starches, however, are employed in the production of jelly confections the results are very poor. The products are short and non-clear.

Van de Maarel et. al. (2005), Starch/Starke 57, p. 465-472 discloses that amylomaltase treated starch can be used for the preparation of gels and may be used as gelatin replacer at a concentration of 3% w/v more.

Surprisingly it has now been found that a composition of amylomaltase treated starch and non-crosslinked starch, whereby the weight ratio between the amylomaltase treated starch and non-crosslinked starch is between 1:9 and 9:1, results in clear elastic wine gums. An advantage of this method is that the flexibility for the producer is improved. The products are less sensitive to variations in cooking temperatures and shear. Furthermore the products are relatively low viscous allowing a high solid production route saving energy as compared to the invention in EP 1146795. Therefore the present invention relates to a starch composition comprising amylomaltase treated starch and non-crosslinked starch, whereby the weight ratio between the amylomaltase treated starch and non-crosslinked starch is between 1:9 and 9:1. and to the use of a starch composition in food preparation whereby the starch composition comprises amylomaltase treated starch and non-crosslinked starch, whereby the weight ratio between the amylomaltase treated starch and non-crosslinked starch is between 1:9 and 9:1.. Preferably the non-crosslinked starch is a native starch. In general the weight ratio between the amylomaltase treated starch and non-crosslinked starch is preferably between 2:8 and 8:2 and most preferably between 3:7 and 7:3. The present invention further discloses food or feed products comprising the starch composition which comprises amylomaltase treated starch and non-crosslinked starch. The food product is preferably a confectionery, more preferably a soft sugar confectionery.

A modified starch is a starch which has undergone one or more chemical modifications, which allows it to function properly for example under high heat and/or shear frequently encountered during food processing. Examples of modified starches are cross-linked starch and amylomaltase treated starch. Native starch designates starch in its natural unmodified form. (Pre)-cooked or (pre-)gelatinized starch is in the present specification also comprised by native starch.

In EP0932444 the production of alpha-1,4-, alpha-1,4-glucosyltransferase (amylomaltase or EC 2.4.1.25) as well as the action of alpha-1,4-, alpha-1,4-glucosyltransferase (amylomaltase or EC 2.4.1.25) on starch is described. "alpha-1,4-, alpha-1,4-glucosyltransferase" and "amylomaltase" will be interchangeable used in this text. This enzyme does not degrade the starch, but reattaches the amylose onto the amylopectin.

The resulting product forms gels above 3% (w/w) solutions in water. These gels, although particulate in nature, have a texture normally connected to gums and other hydrocolloids and are different from gels of acid- or amylase-degraded or debranched products. The gels of amylomaltase-treated starch are thermoreversible at approximately 60°C. "Amylomaltase treated starch", "amylomaltase converted starch" and "amylomaltase modified starch" will be interchangeable used in this text, meaning that the starch is modified by amylomaltase activity. Preferably the enzymatic conversion (or modification or treatment) can be followed by means of reduction of the viscosity when the conversion takes place at 60-75°C. After the desired viscosity reduction has been reached, the conversion can be broken down (see EP0932444).
An example of the production of amylomaltase treated starch is described in EP0932444. The amylomaltase treated starch can be prepared from suspension of potato starch in water (19 - 20 % w/w). This suspension is jet-cooked at 150 - 160°C in order to dissolve the starch. The product is cooled *in vacuo* to 70°C. Flash cooling is a preferred option. The pH is adjusted to 6.2 using for example 6N H₂SO₄. Then amylomaltase (2 ATU/g starch) was added. The solution was stirred for 2 to 20 hr at 70°C. Then the solution was jetcooked at 130 °C for a short time, for example 1 to 20 seconds and spray dried using for example a model Compact spray dryer (Anhydro, Danmark).

It is an object of the present invention to provide a non-protein hydrocolloid that has suitable characteristics to serve as gelatine replacement in foodstuff of varied nature or that can be used to prepare new types of foodstuff. The invention provides a starch composition, comprising a first fraction of amylomaltase treated starch and at least one second fraction comprising non-crosslinked starch whereby the weight ratio between the amylomaltase treated starch and non-crosslinked starch is between 1:9 and 9:1. Said composition is suitable for example to serve as gelatine replacement in foodstuff of varied nature, and is preferably suitable for use in foodstuff such as confectionery. Starches suitable for use in a composition according to the invention are for example chosen from maize, wheat, barley, rice, triticale, rice, millet, tapioca, arrow root, banana, potato, sweet potato starches or from high amylose starches like amylomaize, wrinkled pea starch, mung bean starch or from amylopectin rich starches like waxy maize, waxy barley, waxy wheat, waxy rice, amylopectin potato, amylopectin tapioca, amylopectin sweet potato or amylopectin banana starch. High amylose starches my be derived from naturally occurring mutant from cereal starches like high amylose corn, or peas, beans etc. or from genetically modified plant varieties such as potatoes modified to preferentially produce amylose. Amylopectin starches may be derived from plants that selectively produce amylopectin such as waxy cereals or amylose-free potato mutants and/or genetically modified plant varieties such as potatoes and tapioca modified to selectively produce amylopectin. The non-crosslinked may be further stabilized by acetylation or hydroxypropylation. Non crosslinked starch acetates have an acetyl content which corresponds to a DS or degree of substitution of 0.001 to 0.2, preferably from 0.03 to 0.092, most preferably from 0.05 to 0.092. The term DS used herein indicates the average number of sites per anhydroglucose unit of the starch molecule in which there are substituent groups. Non-crosslinked hydroxypropylated starches have a hydroxypropyl content which corresponds to a DS of 0.001 to 0.3, preferably, 0.03 to 0.21, most preferably 0.06 to 0.21. Stabilisation in general is done by methods known in the art, such as by treatment with acetic anhydride or vinyl acetate, or comparable agents, or by propylene oxide. Amylomaltase treated starch has been described before as gelling agent in patent EP 0932444. Amylomaltase is a so-called alpha 1,4-, alpha 1,4-, glucanotransferase effectively using amylose to chain elongate the amylopectin of starch. The resulting products gel in low concentrations when compared to fluidity starches. Furthermore the gel melts at temperatures higher than 70 °C and regels upon cooling.

In a preferred embodiment of the patent the non-crosslinked starch is a non-crosslinked non-stabilized amylopectin root or tuber starch, such as amylopectin potato or tapioca starch. This embodiment includes mixtures of non-crosslinked non-stabilized amylopectin starches and non-crosslinked non-stabilized amylose containing starches. Further it includes pregelatinized starches. The advantage of using this type of blend is that it is possible to use a product that is completely derived from non-chemically modified starches. It is understood that minor modification that are not intended to alter the properties of the starch are included in this embodiment. The following non restrictive examples of minor modifications of the starch can be envisaged: oxidation, acid degradation, enzymatic degradation, and dextrinization

Sugar-based products, or sugar confectionery, can be divided into the following groups.
1. Hard sugar confectionery (fruit drops, clear mints, barley sugars, and bonbons)
2. Soft sugar confectionery (gums, pastilles, jellies, chewing gums, gelées, liquorice)
3. Lozenges (sheeted/pressed confectionery)
4. Dragees (coated confectionery).
In sugar confectionery starch products, natural gums and proteins are traditionally used as binding and/or gelling agents. There are two main types of soft sugar: gummy products like fruit gums, liquorice gums, pastilles, etc. and elastic products like wine gums, jellies, etc. A binding and/or gelling agent itself has specific properties, which influences the properties of the final product. For soft sugar confectionery applications gelatine is traditionally used as gelling agent, as it imparts, as mentioned before, a desired elasticity to the end product. In soft sugar confectionery thin boiling starches are commonly used to replace gelatine in part, however replacement of gelatine with thin boiling starches leaves the customer with products having a low acceptance as they have little elasticity.

The application of gelatine, starches and mixtures of gelatine and thin boiling starches in soft confectionery is a well-known process. For instance in "Sugar Confectionery Manufacture" edited by E. B. Jackson, Blackie and Son, London 1990 an overview of different process equipment and product recipes are given. Gums, pastilles and jellies can be processed using a variety of techniques, batch cooking, direct cooking (jet cooker), indirect cooking or extrusion cooking. Batch process proceeds through atmospheric cooking in open pans. Colouring, flavouring and moulding and drying in starch moulds follows cooking. Direct cooking comprises two parts: cooking and a vacuum cooling part. The confectionery mass is pumped into the continuous (jet)cooker where it is heated with steam. The pressure of the steam determines the cooking temperature. The slurry is then pumped into the vacuum cooler, where it is cooled and all air removed. When the required concentration is reached, colours and flavouring can be added. The slurry can then be formed. Subsequent drying results in the final products. The composition of the described invention can be used in the above mentioned processes.

The invention will now be described with non-limiting examples

### Examples

### General

One Amylo Maltase unit (ATU) is defined as the amount of amylomaltase which produces 1 µmol of glucose per minute under the assay conditions of the test.

### Assay:

Amylomaltase is incubated with maltotriose at pH 6.50 and 70°C, releasing glucose from the substrate. The incubation is stopped by adding hydrochloric acid. The amount of released glucose is a measure for the amylomaltase activity and is examined using a glucose test assay (NADH formation) on a Selectra analyzer at a wavelength of 340 nm.

### Example 1

### Preparation of Wine Gum Using Direct Cooking

A premix is made of a recipe containing sugar (Kristalsuiker, Suikerunie)/glucose syrup (DE38; BelgoSuc, ratio sugar to water see table 1.), starches (see Table 1.) and water. This premix is cooked at 130 °C in a continuous cooker system from Vomatec. The cooked solution is cooled by applying vacuum. Colour, flavour and citric acid are added to the cooled solution. This solution is moulded into shapes in moulding powder. The moulded products are dried at 55 °C and subsequently evaluated on elasticity, clarity and firmness.

**Table 1 Determination of the influence of an elastic component**

| Recipe | **I** | **II** | **III** | **IV** | **V** |
|---|---|---|---|---|---|
| Amylomaltase treated starch | 4 | 4 | 4 | 6 | 8 |
| Pregelatinized Waxy potato starch | 4 | | 2 | 2 | |
| Pregelatinized Potato starch | | 4 | 2 | 2 | |
| Sugar | 34 | 34 | 34 | 33 | 33 |
| Glucose-syrup DE 38 | 34 | 34 | 34 | 33 | 33 |
| Water | 24 | 24 | 24 | 24 | 24 |

The products all showed good elasticity and were clear, except product V which was non-clear, short and brittle. Product IV was based on its firmness perceived as the best.

## Claims

1. A starch composition comprising amylomaltase treated starch and non-crosslinked starch whereby the weight ratio between the amylomaltase treated starch and non-crosslinked starch is between 1:9 and 9:1.

2. A starch composition of claim1 whereby the weight ratio between the amylomaltase treated starch and non-crosslinked starch is between 2:8 and 8:2 and preferably between 3:7 and 7:3.

3. A starch composition of claim1 or 2 whereby the non-crosslinked starch is a native starch.

4. Food or feed comprising the composition of any one of claims 1 to 3.

5. Food according to claim 4 which is preferably a confectionery, more preferably a soft sugar confectionery.

6. Use of a starch composition in food or feed preparation whereby the starch composition comprises amylomaltase treated starch and non-crosslinked starch whereby the weight ratio between the amylomaltase treated starch and non-crosslinked starch is between 1:9 and 9:1.

7. Use of claim 6 whereby the food is a confectionery.

8. Use of claim 7 whereby the food is a soft sugar confectionery.

9. Use of claim 8 whereby the food is an elastic sugar confectionery such as wine gum or jelly.

10. Use of any one of the claims 6 to 9 wherein the starch composition replaces gelatine.

11. Use of a starch composition according to claim 6, preferably in food preparation, as gelatine replacer.

12. Use of any one of the claims 6 to 11 whereby the non-crosslinked starch is a native starch.

13. Use of any one of the claims 6 to 12 whereby the weight ratio between the amylomaltase treated starch and non-crosslinked starch is between 2:8 and 8:2 and preferably between 3:7 and 7:3.

## Patentansprüche

1. Stärkezusammensetzung, umfassend Amylomaltase behandelte Stärke und nicht vernetzte Stärke, wobei das Gewichtsverhältnis zwischen der Amylomaltase behandelten Stärke und der nicht vernetzten Stärke zwischen 1:9 und 9:1 ist.

2. Stärkezusammensetzung nach Anspruch 1, wobei das Gewichtsverhältnis zwischen der Amylomaltase behandelten Stärke und der nicht vernetzten Stärke zwischen 2:8 und 8:2 und bevorzugt zwischen 3:7 und 7:3 ist.

3. Stärkezusammensetzung nach Anspruch 1 oder 2, wobei die nicht vernetzte Stärke eine native Stärke ist.

4. Lebensmittel oder Futtermittel, umfassend die Zusammensetzung nach einem der Ansprüche 1 bis 3.

5. Lebensmittel nach Anspruch 4, welches bevorzugt eine Süßware, bevorzugter eine weiche Zuckersüßware ist.

6. Verwendung einer Stärkezusammensetzung in Lebensmittel- oder Futtermittelzubereitung, wobei die Stärkezusammensetzung Amylomaltase behandelte Stärke und nicht vernetzte Stärke umfasst, wobei das Gewichtsverhältnis zwischen der Amylomaltase behandelten Stärke und der nicht vernetzten Stärke zwischen 1:9 und 9:1 ist.

7. Verwendung nach Anspruch 6, wobei das Lebensmittel eine Süßware ist.

8. Verwendung nach Anspruch 7, wobei das Lebensmittel eine weiche Zuckersüßware ist.

9. Verwendung nach Anspruch 8, wobei das Lebensmittel eine elastische Zuckersüßware ist, wie Weingummi oder Gelee.

10. Verwendung nach einem der Ansprüche 6 bis 9, wobei die Stärkezusammensetzung Gelatine ersetzt.

11. Verwendung einer Stärkezusammensetzung nach Anspruch 6, bevorzugt in Lebensmittelzubereitung, als Gelatineersatz.

12. Verwendung nach einem der Ansprüche 6 bis 11, wobei die nicht vernetzte Stärke eine native Stärke ist.

13. Verwendung nach einem der Ansprüche 6 bis 12, wobei das Gewichtsverhältnis zwischen der Amylomaltase behandelten Stärke und der nicht vernetzten Stärke zwischen 2:8 und 8:2 und bevorzugt zwischen 3:7 und 7:3 ist.

## Revendications

1. Composition d'amidon comprenant un amidon traité à l'amylomaltase et un amidon non réticulé dans laquelle le rapport en poids entre l'amidon traité à l'amylomaltase et l'amidon non réticulé est compris entre 1:9 et 9:1.

2. Composition d'amidon selon la revendication 1 dans laquelle le rapport en poids entre l'amidon traité à l'amylomaltase et l'amidon non réticulé est compris entre 2:8 et 8:2 et de préférence entre 3:7 et 7:3.

3. Composition d'amidon selon la revendication 1 ou 2 dans laquelle l'amidon non réticulé est un amidon natif.

4. Aliment ou aliment pour animaux comprenant la composition selon l'une quelconque des revendications 1 à 3.

5. Aliment selon la revendication 4 qui est de préférence une confiserie, plus préférablement une confiserie molle à base de sucre.

6. Utilisation d'une composition d'amidon dans une préparation alimentaire ou de type aliment pour animaux dans laquelle la composition d'amidon comprend un amidon traité à l'amylomaltase et un amidon non réticulé dans laquelle le rapport en poids entre l'amidon traité à l'amylomaltase et l'amidon non réticulé est compris entre 1:9 et 9:1.

7. Utilisation selon la revendication 6 dans laquelle l'aliment est une confiserie.

8. Utilisation selon la revendication 7 dans laquelle l'aliment est une confiserie molle à base de sucre.

9. Utilisation selon la revendication 8 dans laquelle l'aliment est une confiserie élastique à base de sucre telle qu'un bonbon gélifié ou une gelée.

10. Utilisation selon l'une quelconque des revendications 6 à 9 dans laquelle la composition d'amidon remplace la gélatine.

11. Utilisation d'une composition d'amidon selon la revendication 6, de préférence dans une préparation alimentaire, à titre de substitut de gélatine.

12. Utilisation selon l'une quelconque des revendications 6 à 11 dans laquelle l'amidon non réticulé est un amidon natif.

13. Utilisation selon l'une quelconque des revendications 6 à 12 dans laquelle le rapport en poids entre l'amidon traité à l'amylomaltase et l'amidon non réticulé est compris entre 2:8 et 8:2 et de préférence entre 3:7 et 7:3.
